# FASCICULE DE BREVET EUROPEEN

(11) **EP 1 120 302 B1**
(45) Date de publication et mention de la délivrance du brevet: **18.10.2006**
(21) Numéro de dépôt: 01440010.5
(22) Date de dépôt: 23.01.2001
(51) Int. Cl.: B60J 1/16

(54) **Ensemble de cadre pour vitre(s) ou glace(s) fixe et/ou mobile**
Rahmenanordnung für Glas oder Fenster, fest oder mobil
Frame assembly for glass or fixed or mobile windows

(30) Priorité: 28.01.2000 FR 0001158
(43) Date de publication de la demande: 01.08.2001
(73) Titulaire: REHAU S.A., 57343 Morhange Cedex (FR)
(72) Inventeur: Kirsch, Fabrice, 57380 Adelange (FR)
(74) Mandataire: Nuss, Pierre

(56) Documents cités:
- DE-C- 4 038 900
- GB-A- 1 374 426
- GB-A- 2 212 846
- US-A- 4 042 004
- US-A- 5 465 531

## Description

La présente invention concerne les dispositifs de fermeture d'une ouverture, en particulier du type baie ou fenêtre, notamment par l'intermédiaire d'un vitrage fixe, mobile ou partiellement fixe et mobile, et a pour objet un ensemble de cadre pour vitre(s) ou glace(s) fixe et/ou mobile, plus particulièrement mais non limitativement pour des véhicules automobiles. Un ensemble avec les caractéristiques du préambule de la revendication 1 est connu du US-A-5465531. Les cadres sont assemblés par éléments mécaniques d'assemblage ou par adhésif.

Actuellement, la plupart des fenêtres ou baies de véhicules automobiles, notamment celles intégrées dans une portière d'un tel véhicule, est réalisée en solidarisant ou en conformant un cadre en tôle profilé en U sur les bords de l'ouverture destinée à recevoir le ou les vitrages de la fenêtre.

Ensuite, une coulisse, un joint lécheur extérieur et un joint lécheur intérieur sont installés aux endroits adaptés de l'ouverture ou de la portion d'ouverture recevant une vitre mobile, et/ou une garniture d'étanchéité et, éventuellement, un montant séparateur pour la vitre fixe, sont montés dans ledit profilé en tôle.

Il en résulte un nombre important d'opérations d'assemblage et de montage sur la chaîne de montage, la nécessité de pouvoir accéder à la portière par les deux côtés et la gestion d'un grand nombre de pièces différentes.

Plusieurs solutions ont été proposées pour tenter de pallier les inconvénients de la réalisation traditionnelle précitée.

Toutefois, ces nouvelles solutions présentent toutes un ou plusieurs inconvénients majeurs, à savoir, entre autres, une structure compliquée et d'un montage fastidieux, une résistance limitée de l'assemblage obtenu, une adaptation à un certain type de vitre ou de support uniquement, une nécessite de double accès par les deux côtés, une mise en oeuvre uniquement avec des structures à plusieurs éléments.

La présente invention a notamment pour but, notamment dans le contexte précité, de fournir une solution simple pour laquelle les opérations de montage et d'assemblage sont réduites et aisées à exécuter, ne nécessitant un accès que d'un seul côté, réduisant le nombre de pièces à assembler, permettant de s'affranchir du profilé en U en tôle tout en autorisant la conservation des coulisses et des garnitures actuelles, applicable à des éléments d'un seul tenant ou en plusieurs parties et garantissant un montage rigide et résistant.

A cet effet, la présente invention a pour objet un ensemble de cadre pour vitre(s) ou glace(s) fixe et/ou mobile fermant une ouverture, avec les caractéristiques de la revendication 1.

La présente invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
la figure 1 est une vue en élévation latérale, depuis le côté extérieur, d'un ensemble de cadre selon l'invention, équipé d'une vitre mobile et d'une vitre fixe ;
les figures 2A à 2G sont des vues en coupe transversale, respectivement selon A-A, B-B, C-C, D-D, E-E, F-F et G-G de l'ensemble de cadre représenté sur la figure 1 ;
la figure 3 est une vue en élévation latérale, depuis le côté intérieur, d'un cadre extérieur faisant partie de l'ensemble de cadre représenté sur la figure 1 ;
les figures 4A à 4D sont des vues en coupe transversale, respectivement selon A-A, B-B, C-C et D-D du cadre extérieur représenté sur la figure 3 ;
la figure 5 est une vue en élévation latérale, depuis le côté extérieur d'un cadre intérieur faisant partie de l'ensemble de cadre représenté sur la figure 1 ;
la figure 5A est une vue en perspective de la portion comprise entre les lignes de coupe A et B du cadre intérieur représenté sur la figure 5;
la figure 6 est une vue identique à celle de la figure 2F, mais à une échelle différente ;
les figures 7A à 7C sont des vues en coupe transversale identiques à celle de la figure 6, respectivement du cadre extérieur, de la coulisse et du cadre intérieur ;
la figure 8 est une vue en coupe transversale montrant le montage par emboîtement du cadre intérieur sur le bord de l'ouverture recevant la ou les vitres ou glaces ;
les figures 9A, 9B et 9C sont respectivement des vues en perspective, en coupe longitudinale et en coupe transversale selon A-A d'un montant de séparation à section en H rapporté, faisant partie de l'ensemble de cadre selon l'invention ;
la figure 10 est une vue identique à celle de la figure 2E, mais à une échelle différente ;
la figure 11 est une vue en coupe identique à celle de la figure 6, d'une variante de réalisation de l'ensemble de cadre selon l'invention, et,
les figures 12A et 12B sont des vues en coupe identiques, respectivement, à celles des figures 2C et 2G, d'une autre variante de réalisation de l'ensemble de cadre selon l'invention.

Comme le montrent les figures des dessins annexés, l'invention concerne un ensemble de cadre pour vitre(s) ou glace(s) fixe 6' et/ou mobile 6 fermant une ouverture 5, notamment pour baie ou fenêtre de véhicule automobile, et particulièrement, mais non limitativement, pour une fenêtre de portière 9 de véhicule automobile.

Conformément à l'invention, ledit ensemble comprend essentiellement un cadre extérieur 1 formant porte-coulisse 2 et/ou porte-garniture 3, éventuellement constitué de plusieurs segments longitudinaux, et un cadre intérieur 4 profilé formant bordure d'habillage, éventuellement constitué de plusieurs segments longitudinaux, les cadres extérieur 1 et intérieur 4, ou au moins certains de leurs segments constitutifs respectifs, étant assemblés entre eux et solidarisés avec le bord 5' de l'ouverture 5 recevant la vitre ou la glace 6, 6' par des moyens coopérant 7, 7' ; 8, 8' d'assemblage et de montage par emboîtement et encliquetage.

Dans la présente demande, les expressions "extérieur" et "intérieur", s'appliquant à des éléments, à des positions relatives d'éléments ou encore à des côtés ou des faces d'éléments, sont à considérer en relation avec le volume intérieur délimité partiellement par la baie ou la fenêtre par rapport à l'environnement extérieur.

Comme il ressort de ce qui précède, l'ensemble ou arrangement de cadre est essentiellement constitué dans toutes les variantes de réalisation de l'invention, de deux sous-ensembles structurels à assembler, à savoir, d'une part, le cadre extérieur 1 avec au moins une coulisse 2 pour vitre mobile 6 et/ou éventuellement une garniture d'étanchéité 3 pour vitre fixe 6' et, d'autre part, le cadre intérieur 4. Ces deux sous-ensembles étant simultanément assemblés entre eux par coopération de moyens d'assemblage complémentaires par encliquetage, par exemple mâles et femelles, et montés dans l'ouverture 5 par emboîtement ou engagement avec coopération de forme de certains desdits moyens d'assemblage, notamment les moyens mâles, avec le matériau du bord 5' de ladite ouverture 5, par exemple par introduction dans des ouvertures de passage dont la section est ajustée à celle desdits moyens mâles.

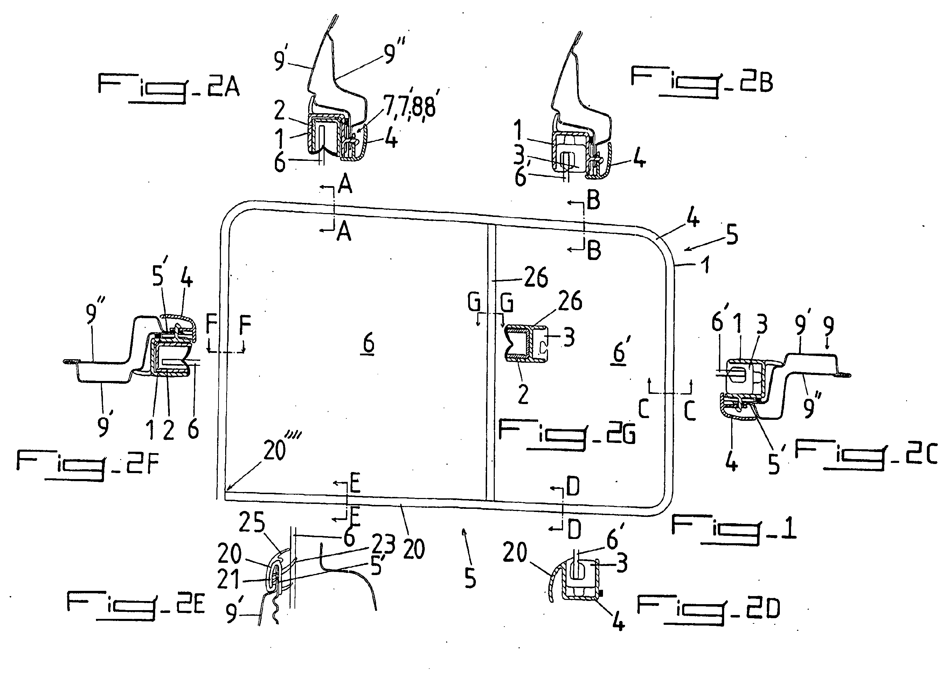

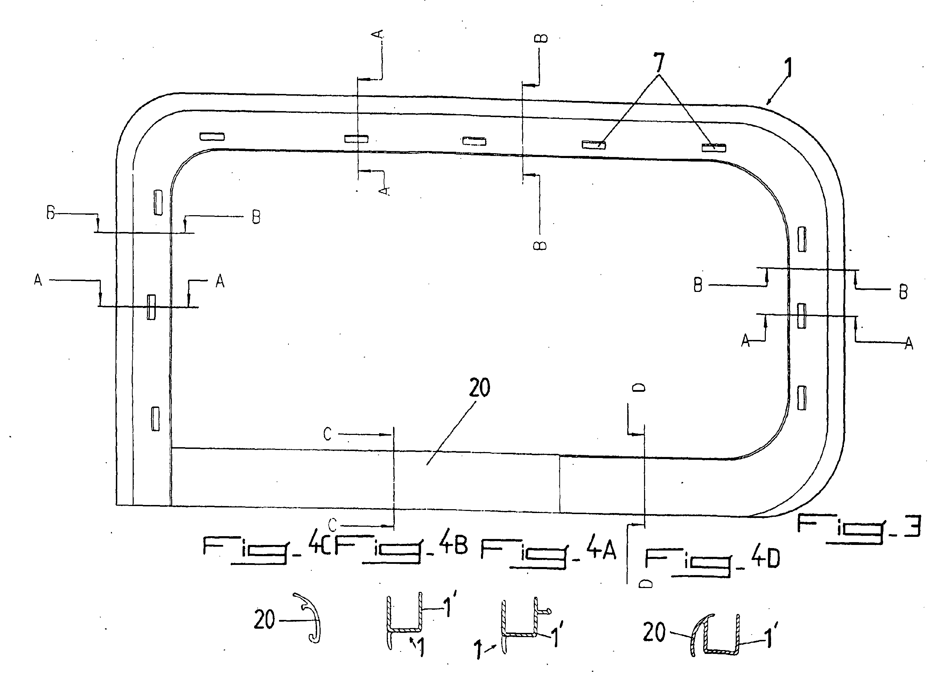

Conformément à un mode de réalisation préférée de l'invention, représenté notamment aux figures 2A à 2C, 2D, 6, 11 et 12A des dessins annexés, le cadre extérieur 1, ou le cas échéant certains de ses segments constitutifs, comporte(nt) plusieurs pattes ou portions d'aile 7 proéminentes se terminant chacune par un moyen d'accrochage 7' et le cadre intérieur 4, ou le cas échéant certains de ses segments constitutifs, comporte(nt) une aile ou des segments d'aile de solidarisation 8 pourvue(s) d'orifices 8' de réception des extrémités à moyens d'accrochage 7' des pattes ou portions d'aile 7 du cadre extérieur 1 ou des segments de celui-ci, l'assemblage et le montage dudit ensemble de cadre 1, 4 dans l'ouverture 5 du support 9 recevant ladite au moins une vitre ou glace 6, 6', par exemple une ouverture de fenêtre dans une porte ou portière, étant réalisés par introduction desdites pattes ou portions d'aile 7 dans des ouvertures de passage 10 de forme, de dimensions et de disposition adaptées ménagées dans le bord 5' de l'ouverture 5 du support 9, et extension de leurs extrémités pourvues des moyens d'accrochage 7' au-delà de l'aile ou des segments d'aile de solidarisation 8 avec réalisation d'une liaison par venue en prise par encliquetage desdits moyens d'accrochage 7' au niveau desdits orifices de réception 8', le bord 5' de l'ouverture 5 étant ainsi pris en sandwich entre lesdits cadres extérieur 1 et intérieur 4, préférentiellement avec pincement élastique.

Le moyen d'accrochage 7' pourra, par exemple, consister en un crochet ou harpon, avec une surface inclinée muni d'un décrochement, les pattes ou portions d'aile 7 présentant en extrémité ledit moyen 7' étant avantageusement élastiquement déformées lors du passage dudit moyen 7' et/ou ledit moyen d'accrochage 7' présentant une section maximale plus importante que celle des orifices de réception 8' correspondants, de telle manière qu'après passage de l'aile 8, ledit moyen d'accrochage 7' vienne en prise sur la face arrière de ladite aile 8 au niveau du bord de l'orifice 8' traversé.

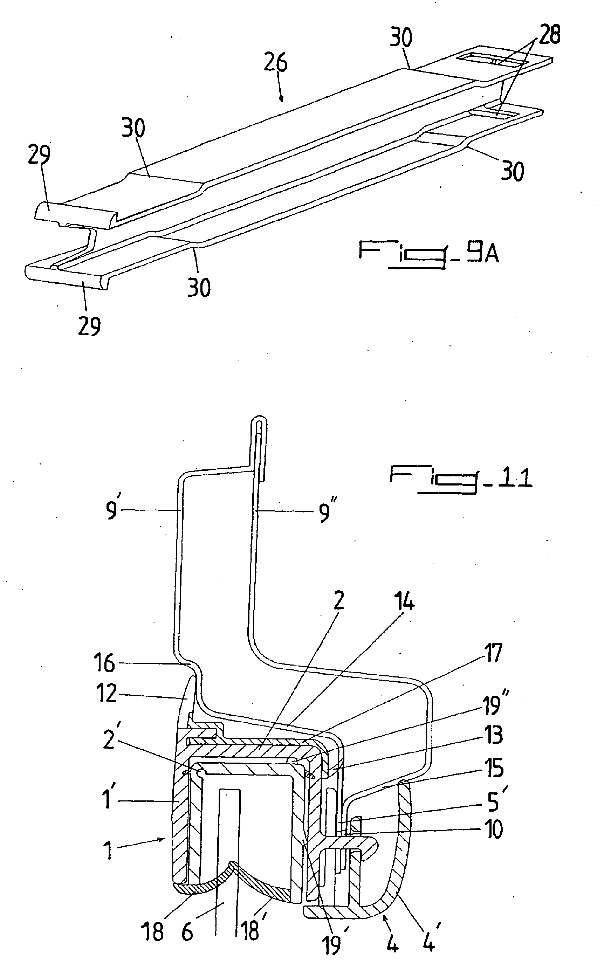

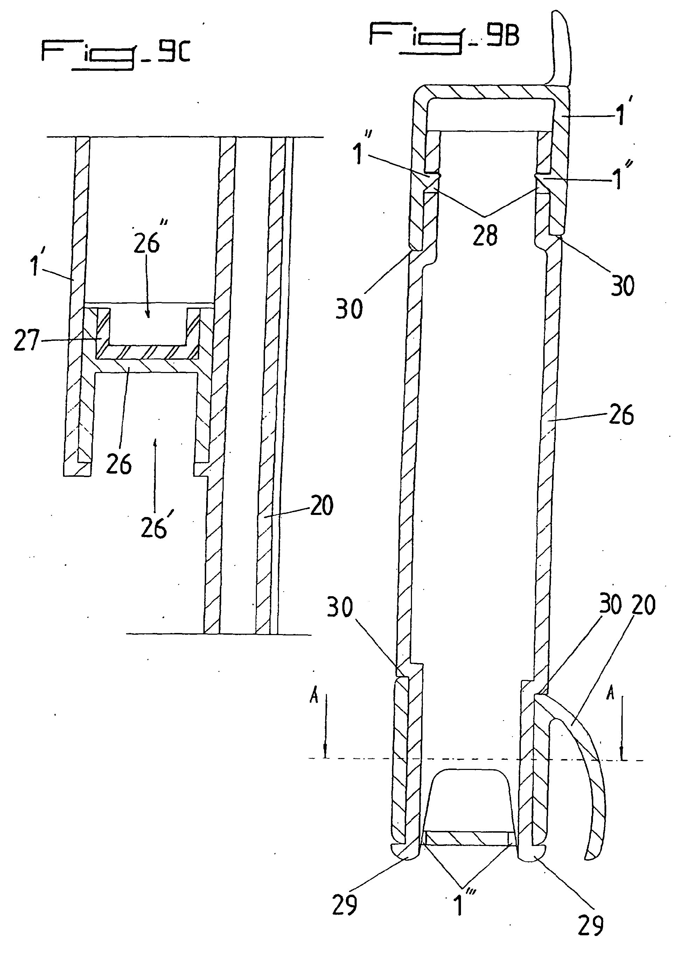

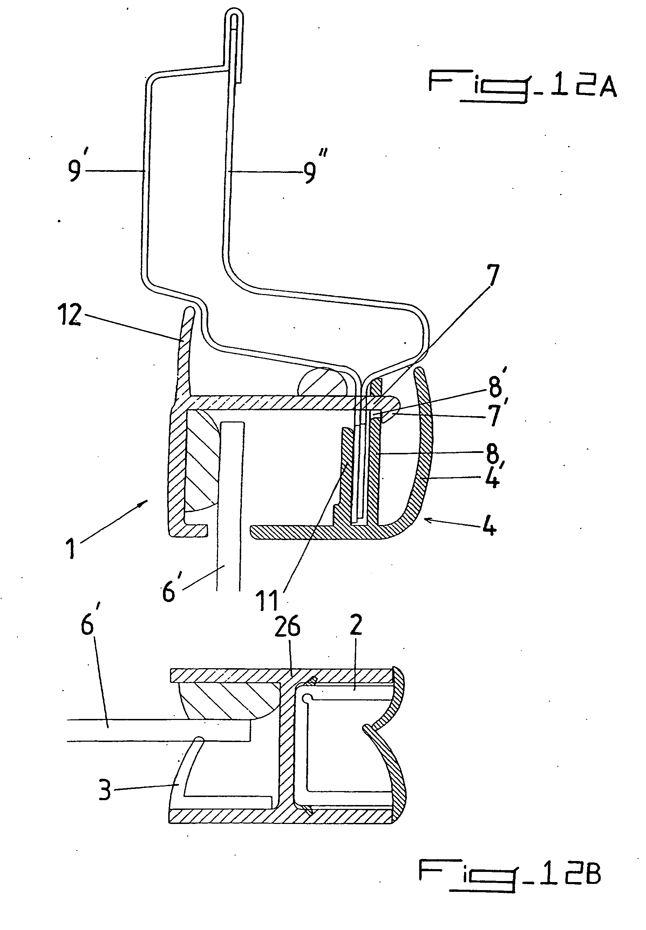

Pour faciliter l'introduction et le passage desdits moyens d'accrochage 7', les orifices de réception 8' pourront avantageusement présenter, en section transversale, une section tronconique ou des bords biseautés ou arrondis au niveau de leur ouverture d'introduction (voir figure 8).

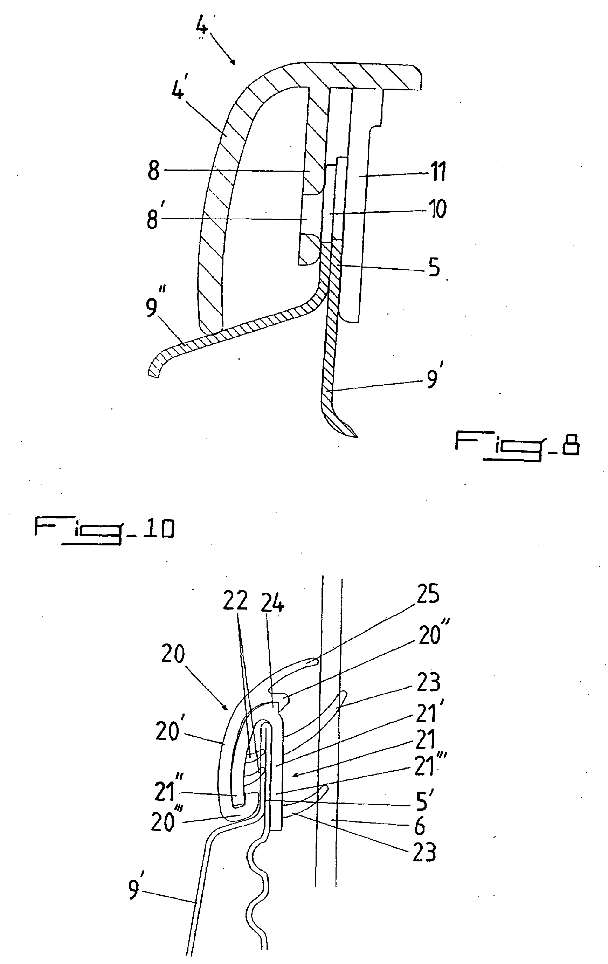

Selon une caractéristique de l'invention, représentée notamment aux figures 2A à 2C, 2F, 5A, 6, 7C, 8 et 11 des dessins annexés, le cadre intérieur 4 est constitué par un corps profilé 4' constituant un cache intérieur recouvrant le bord 5' de l'ouverture 5 et les moyens 7, 7', 8, 8' de montage et d'assemblage des deux cadres 1 et 4 et sur lequel sont formées, d'une part, une aile ou des segments d'aile de solidarisation 8 comportant des orifices 8' de réception et d'accrochage et, d'autre part, une seconde aile 11 formant contre-aile ou des segments espacés de contre-aile 11, s'étendant à distance et sensiblement parallèlement à l'aile ou aux segments d'aile de solidarisation 8, l'écartement et la conformation de l'aile de solidarisation 8 et de la contre-aile 11 étant adaptés pour une réception entre elles du bord 5' de l'ouverture 5 avec un effet de pincement élastique et/ou d'encliquetage.

Cette dernière disposition autorisera notamment, lors du montage de l'ensemble de cadre, une installation préalable avec maintien du cadre intérieur 4 ou de ses portions constitutives sur le bord 5' de l'ouverture 5, sans nécessiter de moyens de rétention particuliers et sans risque de désolidarisation et de chute, avant la mise en place du cadre extérieur 1.

En outre, le corps profilé 4' ou au moins sa surface tournée vers l'intérieur pourra présenter, une conformation, une largeur apparente, un état de surface et une coloration adaptés à la conformation géométrique intérieure du support 9 et à l'aspect esthétique recherché.

Pour augmenter l'effet de pincement du bord 5' et la rigidité de l'assemblage et du montage de l'ensemble de cadre, la contre-aile ou les segments de contre-aile 11 s'étende(nt), en hauteur, au-delà des orifices de réception 8' de l'aile ou des segments d'aile de solidarisation 8, ladite contre-aile 11 présentant des ouvertures, ou les segments de contre-aile 11 présentant des intervalles 11' entre segments successifs, autorisant le passage des pattes ou portions d'aile 7 du cadre extérieur 1 venant s'accrocher au niveau de l'aile ou des segments d'aile de solidarisation 8.

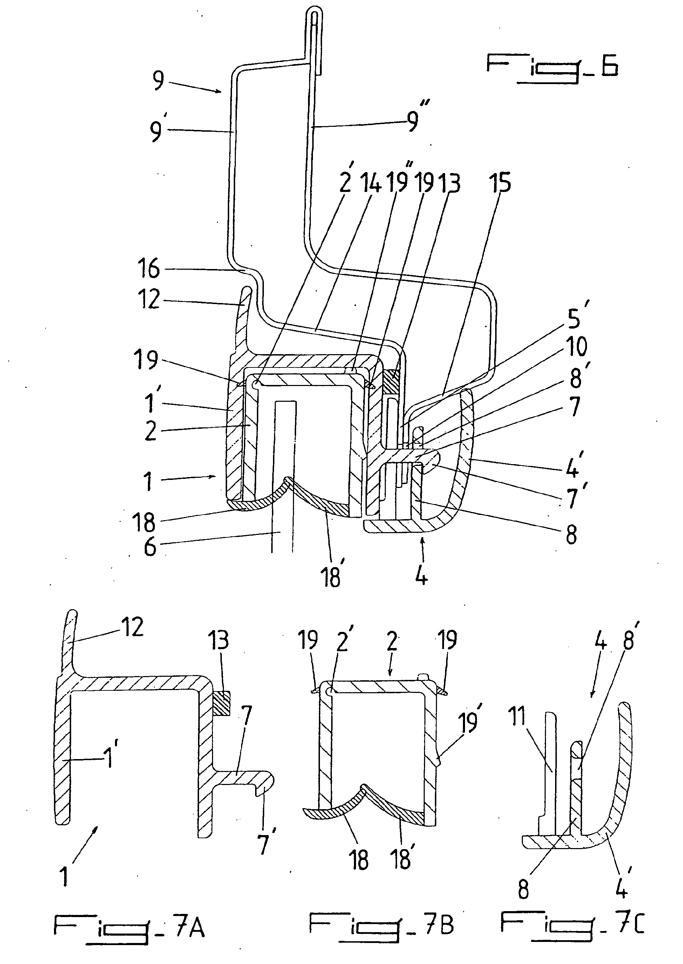

On obtient ainsi, en effectuant une observation de la zone d'assemblage et de montage en section transversale (figures 6 et 11 notamment), une construction mutuellement imbriquée et comprimée des ailes des cadres 1et 4 et du bord 5', assurant une liaison transversale et un montage rigides et sans jeu.

Une constitution en segments de la contre-aile 11 permettra d'obtenir une structure plus flexible et élastiquement déformable en flexion. En outre, lesdits segments 11 pourront comporter une base 11'' élargie en section servant de butée d'appui au cadre extérieur 1.

Pour permettre la mise en oeuvre d'une coulisse 2 pour vitre mobile 6 et une garniture d'étanchéité pour vitre fixe 6 de formes traditionnelles (à section en U), le cadre extérieur 1 comporte avantageusement un corps profilé 1' présentant en section, au moins sur une partie de sa longueur, sensiblement une structure en U à branches orthogonales. De plus, sur ledit corps 1' est formé ou rapporté, sur au moins une partie de sa longueur, au moins un moyen d'étanchéité 12, 13 venant s'appliquer sous contrainte contre la face ou paroi externe 9' du support 9 comportant l'ouverture 5 recevant la vitre ou la glace 6 et/ou 6' après assemblage et montage dudit ensemble de cadre 1, 4.

En vue d'une installation rapide de l'ensemble de cadre et de son intégration continue dans la structure générale du support 9, il est préférentiellement prévu, notamment dans le cas d'un support 9 à double parois espacées 9', 9", tel qu'une portière de véhicule automobile, que ledit support 9 présente, d'une part, un décrochement extérieur 14 permettant un logement affleurant du cadre extérieur 1 et, d'autre part, un décrochement intérieur 15, contre lequel repose le corps profilé 4' du cadre intérieur 4 en forme de L inversé, pour obtenir un bord 5' d'ouverture 5 dudit support 9 de faible épaisseur, formé le cas échéant par la jonction surfacique des portions de parois 9', 9" formant ledit support 9 (Figures 2A à 2C, 2F, 6, 11 et 12A).

La partie de la longueur du cadre extérieur 1 présentant un corps profilé 1 à section en U correspondra au moins à la portion du cadre 1 recevant la coulisse 2. En effet, comme le montre la figure 12A, ledit cadre 1 pourra éventuellement, au niveau de sa portion entourant une vitre fixe 6', présenter une section en L (en fait une section en U dépourvue d'une aile latérale) pour permettre une introduction latérale de ladite vitre fixe 6' et sa fixation par collage. Dans ce dernier cas, le cadre extérieur 1 pourra, en outre, éventuellement être solidarisé au support 9 par une ligne ou des points de collage.

Comme le montrent les figures 2A à 2C, 2F, 6 et 11 des dessins annexés, le cadre extérieur 1 est pourvu, d'une part, d'une aile rigide ou d'un joint à lèvre extérieur(e) 12 venant en application contre la face ou paroi externe 9' du support 9, éventuellement au niveau d'un second décrochement 16 de la face ou paroi extérieure 9', et, d'autre part, d'un joint de compression ou d'un second joint à lèvre 13 venant en application à proximité des passages 10 du bord 5' de l'ouverture 5 et pincé entre la face ou paroi externe 9' de ce dernier et le cadre extérieur 1 lors de l'assemblage et du montage des deux cadres 1 et 4 dans l'ouverture 5, les joints à lèvre extérieur 12 et intérieur 13 étant le cas échéant formés sur un même profilé support 17 monté par emboîtement et par conjugaison de forme sur le corps 1' du cadre extérieur 1 (Figure 11).

Lorsque l'aile 12 est formée d'un seul tenant avec le cadre 1, elle pourra présenter une structure rigide si elle est constituée du même matériau que ledit cadre ou une structure souple en cas d'injection bi-matière.

L'application sous pression du joint ou de l'aile 12 sur le support 9 et la compression du joint 13 permettront, en outre, d'éviter toute vibration du cadre 1.

L'aile ou le joint 12, préférentiellement continu(e) en face externe avec l'aile formant la branche extérieure du U du cadre extérieur 1, fera également office, en association avec ledit cadre 1, d'élément d'habillage extérieur pour l'ouverture 5 et présentera, par conséquent, ainsi que ladite aile extérieure du cadre 1, un état de surface et une coloration adaptés à la paroi externe 9' et à l'aspect esthétique souhaité.

Dans le cas d'une vitre 6 mobile, le cadre extérieur 1 reçoit une coulisse profilé 2 à section en U pourvue, aux extrémités libres des branches du U, de deux joints à lèvres 18 et 18' dirigés l'un vers l'autre et fermant sensiblement l'ouverture de la rainure formée par ladite coulisse 2, et munie sur sa face externe de lèvres d'étanchéité 19 et d'au moins une protubérance de calage et d'accrochage 19', par exemple un cran profilé, pour assurer la tenue et le maintien de ladite coulisse 2 dans le cadre extérieur 1 dans lequel ladite coulisse 2 est reçue en y étant entièrement intégrée.

Les deux joints à lèvres 18 et 18' pouvant préférentiellement être coextrudés avec le corps de la coulisse 2, ce dernier pouvant par exemple se présenter sous la forme d'un profilé en L, dont la grande aile est pourvue d'une rainure 2' permettant le repliement sous contrainte d'une partie de cette grande aile pour former un profilé en U, ce qui contribuera au calage et au maintien de ladite coulisse 2 dans ledit cadre 1 figures (6, 7B et 11).

Le joint extérieur 18 pourra se prolonger vers l'extérieur pour, après installation, également recouvrir l'aile extérieure du cadre 1 à section en U et assurer ainsi l'étanchéité entre la coulisse 2 et l'intérieur dudit cadre 1.

De plus, la solidarisation de la coulisse 2 dans le cadre 1 pourra par exemple être effectuée au moyen d'une ligne de colle 19", par tenue au moyen des lèvres 19 (19" étant alors une butée d'enfoncement), ou analogue.

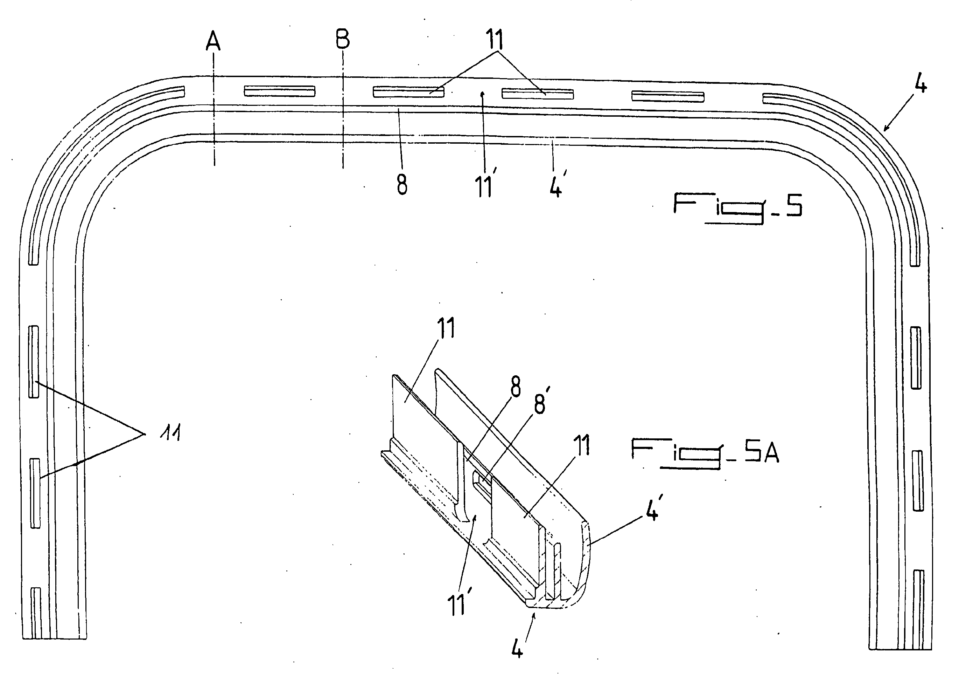

Conformément à un mode de réalisation préféré de l'invention, représenté notamment sur les figures 3 et 5 des dessins annexés, les cadres extérieur 1 et intérieur 4 sont réalisés chacun d'un seul tenant par moulage par injection d'un matériau ou d'un mélange de matériaux thermoplastique(s), ou éventuellement thermodurcissables, et s'étendent, dans le cas d'une ouverture 5 quadrilatérale, sur au moins trois côtés de ladite ouverture 5.

Le ou les matériaux thermoplastique(s) présenteront une résistance mécanique et une rigidité suffisante pour l'application envisagée et pourront à titre d'exemples, consister en du polyamide ou du polypropylène.

Selon une caractéristique supplémentaire de l'invention, entraînant une plus grande intégration de composants dans l'ensemble de cadre et une réduction du nombre de pièces distinctes à mettre en oeuvre, le cadre extérieur 1 peut être prolongé, par exemple au niveau du quatrième côté d'une ouverture 5 quadrilatérale, par un profilé de parement extérieur 20, formé d'un seul tenant avec une extrémité dudit cadre extérieur 1 et pouvant être solidarisé mécaniquement avec l'autre extrémité dudit cadre 1, destiné à recouvrir un profilé à joint(s) lécheur(s) 21 extérieur et à verrouiller le montage de ce dernier sur le bord 5' correspondant de l'ouverture 5 concerné.

Comme le montrent notamment les figures 2E et 10 des dessins annexés, le profilé à joint(s) lécheur(s) 21 présentera avantageusement un corps 21' ayant une section sensiblement en forme de U, pouvant être monté par emboîtement sur le bord 5' de l'ouverture 5 concernée et comportant, d'une part, au moins une, et préférentiellement deux, lèvre(s) de fixation 22 situés sur la face interne de la branche extérieure 21" du U et venant s'appliquer sur la face externe du bord 5' de l'ouverture 5 et, d'autre part, au moins une, et préférentiellement deux, lèvre(s) d'étanchéité 23 s'étendant à partir de la face externe de la branche intérieure 21''' du U et venant s'appliquer contre la vitre mobile 6 et lécher cette dernière lorsqu'elle se déplace.

Les figures précitées montrent également une forme de réalisation préférentielle du profilé de parement 20, dans laquelle ce dernier présente un corps principal 20' ayant une section sensiblement en C dont l'extrémité supérieure 20" en forme de crochet vient en prise sur un décrochement extérieur 24 protubérant de l'âme du corps 21' du profilé à joints lécheurs 21 et dont l'extrémité inférieure recourbée 20''' entoure et vient en prise arrière sur l'extrémité libre de la branche extérieure 21''' du corps 21' du profilé à joints lécheurs 21, ledit profilé de parement 20 comportant en outre une projection 25 en forme d'aile dans la continuité de la courbure du corps principal 20' et destinée à couvrir sensiblement l'espace entre le corps 21' du profilé 21 et la vitre ou la glace mobile 6 (sans toutefois prendre appui sur cette dernière).

Les conformations respectives des profilés 20 et 21 permettent un verrouillage par enclenchement de la prise de l'extrémité supérieure en forme de crochet 20" au niveau du décrochement protubérant 24 du corps 21' du profilé à joints lécheurs 21.

L'extrémité libre 20"" du profilé de parement 20 pourra être solidarisé par une liaison par emboîtement ou encliquetage avec l'extrémité en regard du cadre 1 pour former une structure fermée. De plus, ladite extrémité de cadre 1 pourra éventuellement comporter, formée d'un seul tenant avec elle, un triangle de montage pour un rétroviseur ou un cache de forme analogue.

En présence d'une partie de vitre fixe 6' et d'une partie de vitre mobile 6, les deux parties de vitre 6 et 6' sont avantageusement séparées par un montant profilé 26 à section en H, rapporté par montage par enclenchement ou formé d'un seul tenant avec le cadre extérieur 1, ledit montant profilé en H 26 définissant deux rainures opposées 26', 26" dont l'une reçoit une portion de garniture d'étanchéité 3 pour la partie de vitre fixe 6' et dont l'autre reçoit une portion de coulisse 2 de la vitre mobile 6, au moins l'une desdites nervures 26', 26" pouvant éventuellement recevoir de manière ajustée un profilé de renfort métallique 27 (voir notamment figures 1, 2G, 9A à 9C et 12B).

Comme indiqué précédemment le montant séparateur 26 pourra être formé d'un seul tenant avec le cadre 1 et la vitre fixe 6' être rapportée par collage dans la rainure correspondante dudit montant 26 et dans la portion de cadre 1 concerné recevant les bords de ladite vitre fixe 6' (figure 12A et 12B).

Toutefois, selon une autre variante de réalisation de l'invention, autorisant un montage traditionnel de la vitre fixe 6' et la mise en oeuvre d'une garniture 3 traditionnelle à section en U, le montant profilé 26 rapporté peut être monté par emboîtement dans deux zones en regard du corps profilé 1' à section en U du cadre extérieur 1 et est pourvu, à l'une des extrémités des deux parois parallèles correspondant aux deux branches de la section en H, d'ouvertures 28 pour l'engagement avec enclenchement de protubérances 1'' formées sur les parois internes des deux parois latérales du corps 1' à section en U au niveau de la première zone, et, à l'autre desdites extrémités des parois latérales du montant profilé 26, de deux crochets opposés 29 destinés à s'engager avec enclenchement dans des ouvertures correspondantes 1''' ménagées dans l'âme du corps 1' à section en U au niveau de la seconde zone, le montant profilé rapporté 26 reposant en outre, au niveau des deux zones, sur les extrémités des branches dudit corps 1' à section en U du cadre extérieur 1 par l'intermédiaire de décrochements 30 adaptés formés dans les deux parois parallèles dudit montant 26 à section en H (figures 9A, 9B et 9C).

Ce type de montage et de liaisonnement du montant séparateur 26 avec le cadre 1 entraînera un blocage en position et un verrouillage dudit montant 26 dans les trois directions orthogonales d'un repère affecté audit montant 26.

La présente invention a également pour objet un sous ensemble pour fenêtre de portière de véhicule automobile, comportant une vitre mobile et une vitre fixe, caractérisé en ce qu'il est constitué par un cadre extérieur tel que décrit ci-dessus, prolongé par un profilé de parement et dans lequel sont au moins rapportés des garnitures d'étanchéité pour vitre fixe, un montant séparateur à section en H, une vitre fixe et une coulisse pour vitre mobile.

Par ailleurs, l'invention concerne aussi une portière de véhicule automobile pourvue d'une fenêtre, caractérisé en ce qu'il comporte un ensemble de cadre pour vitre(s) ou glace(s) tel que décrit ci-dessus.

Grâce à l'invention, il est donc possible de proposer un cadre pour vitre(s) ou glace(s) fixe et/ou mobile présentant, en plus des améliorations par rapport aux solutions connues déjà indiquées ci-dessus, de nombreux avantages par rapport à la solution traditionnelle de cadre-coulisse en caoutchouc.

Ces avantages sont principalement de trois types, à savoir :
- mécanique : utilisation d'une matière dure du type PA ou ABS au lieu d'une matière souple ; pièce d'un seul tenant au lieu de plusieurs profilés assemblés entre eux ;
- esthétique : absence de différences de teinte et de brillance (profilé d'un seul tenant, pas de surmoulage) ; cadre en matière dure conférant un aspect de surface amélioré par rapport à une matière souple (caoutchouc) ; grainage possible sur toute la surface visible de la pièce injectée ; possibilité d'intégrer dans la masse des inscriptions, des monogrammes ou analogues ; coloration dans la masse et/ou par application de peinture ; possibilité de chromage ;
- économique : réduction des coûts par la réduction du nombre d'opérations nécessaires à la fabrication et à l'installation, notamment en ce qui concerne les opérations de cintrage, de coupe, d'assemblage, de surmoulage ou analogue.

## Revendications

1. Ensemble de cadre pour vitre(s) ou glace(s) fixe et/ou mobile fermant une ouverture d'un support (9), notamment pour baie ou fenêtre de véhicule automobile, comprenant un cadre extérieur (1) formant porte-coulisse (2) et/ou porte-garniture (3), éventuellement constitué de plusieurs segments longitudinaux, et un cadre intérieur (4) profilé formant bordure d'habillage, éventuellement constitué de plusieurs segments longitudinaux, **caractérisé en ce que** les cadres extérieur (1) et intérieur (4), ou au moins certains de leurs segments constitutifs respectifs, sont assemblés entre eux et solidarisés avec un bord (5') de l'ouverture (5) recevant la vitre ou la glace (6, 6') par des moyens coopérant (7, 7' ; 8, 8') d'assemblage et de montage par emboîtement et encliquetage.

2. Ensemble de cadre selon la revendication 1, **caractérisé en ce que** le cadre extérieur (1), ou le cas échéant certains de ses segments constitutifs, comporte(nt) plusieurs pattes ou portions d'aile (7) proéminentes se terminant chacune par un moyen d'accrochage (7') et le cadre intérieur (4), ou le cas échéant certains de ses segments constitutifs, comporte(nt) une aile ou des segments d'aile de solidarisation (8) pourvue(s) d'orifices (8') de réception des extrémités à moyens d'accrochage (7') des pattes ou portions d'aile (7) du cadre extérieur (1) ou des segments de celui-ci, l'assemblage et le montage dudit ensemble de cadre (1, 4) dans l'ouverture (5) du support (9) recevant ladite au moins une vitre ou glace (6, 6'), par exemple une ouverture de fenêtre dans une porte ou portière, étant réalisés par introduction desdites pattes ou portions d'aile (7) dans des ouvertures de passage (10) de forme, de dimensions et de disposition adaptées ménagées dans le bord (5') de l'ouverture (5) du support (9) et extension de leurs extrémités pourvues des moyens d'accrochage (7') au-delà de l'aile ou des segments d'aile de solidarisation (8) avec réalisation d'une liaison par venue en prise par encliquetage desdits moyens d'accrochage (7') au niveau desdits orifices de réception (8'), le bord (5') de l'ouverture (5) étant ainsi pris en sandwich entre lesdits cadres extérieur (1) et intérieur (4), préférentiellement avec pincement élastique.

3. Ensemble de cadre selon l'une quelconque des revendications 1 et 2, **caractérisé en ce que** le cadre intérieur (4) est constitué par un corps profilé (4') constituant un cache intérieur recouvrant le bord (5') de l'ouverture (5) et les moyens (7, 7', 8, 8') de montage et d'assemblage des deux cadres (1 et 4) et sur lequel sont formées, d'une part, une aile ou des segments d'aile de solidarisation (8) comportant des orifices (8') de réception et d'accrochage et, d'autre part, une seconde aile (11) formant contre-aile ou des segments espacés de contre-aile (11), s'étendant à distance et sensiblement parallèlement à l'aile ou aux segments d'aile de solidarisation (8), l'écartement et la conformation de l'aile de solidarisation (8) et de la contre-aile (11) étant adaptés pour une réception entre elles du bord (5') de l'ouverture (5) avec un effet de pincement élastique et/ou d'encliquetage.

4. Ensemble de cadre selon la revendication 3, **caractérisé en ce que** la contre-aile ou les segments de contre-aile (11) s'étende(nt), en hauteur, au-delà des orifices de réception (8') de l'aile ou des segments d'aile de solidarisation (8), ladite contre-aile (11) présentant des ouvertures, ou les segments de contre-aile (11) présentant des intervalles (11') entre segments successifs, autorisant le passage des pattes ou portions d'aile (7) du cadre extérieur (1) venant s'accrocher au niveau de l'aile ou des segments d'aile de solidarisation (8).

5. Ensemble de cadre selon l'une quelconque des revendications 1 à 4, **caractérisé en ce que** le cadre extérieur (1) comporte un corps profilé (1') présentant en section, au moins sur une partie de sa longueur, sensiblement une structure en U à branches orthogonales, et **en ce que** sur ledit corps (1') est formé ou rapporté, sur au moins une partie de sa longueur, au moins un moyen d'étanchéité (12, 13) venant s'appliquer sous contrainte contre la face ou paroi externe (9') du support (9) comportant l'ouverture (5) recevant la vitre ou la glace (6, 6') après assemblage et montage dudit ensemble de cadre (1,4).

6. Ensemble de cadre selon l'une quelconque des revendications 1 à 5, **caractérisé en ce que**, notamment dans le cas d'un support (9) à double parois espacées (9', 9"), tel qu'une portière de véhicule automobile, ledit support (9) présente, d'une part, un décrochement extérieur (14) permettant un logement affleurant du cadre extérieur (1) et, d'autre part, un décrochement intérieur (15), contre lequel repose le corps profilé (4') du cadre intérieur (4) en forme de L inversé, pour obtenir un bord (5') d'ouverture (5) dudit support (9) de faible épaisseur, formé le cas échéant par la jonction surfacique des portions de parois (9', 9") formant ledit support (9).

7. Ensemble de cadre selon les revendications 5 et 6, **caractérisé en ce que** le cadre extérieur (1) est pourvu, d'une part, d'une aile rigide ou d'un joint à lèvre extérieur(e) (12) venant en application contre la face ou paroi externe (9') du support (9), éventuellement au niveau d'un second décrochement (16) de la face ou paroi extérieure (9'), et, d'autre part, d'un joint de compression ou d'un second joint à lèvre (13) venant en application à proximité des passages (10) du bord (5') de l'ouverture (5) et pincé entre la face ou paroi externe (9') de ce dernier et le cadre extérieur (1) lors de l'assemblage et du montage des deux cadres (1 et 4) dans l'ouverture (5), les joints à lèvre extérieur (12) et intérieur (13) étant le cas échéant formés sur un même profilé support (17) monté par emboîtement et par conjugaison de forme sur le corps (1') du cadre extérieur (1).

8. Ensemble de cadre selon l'une quelconque des revendications 1 à 7, **caractérisé en ce que**, dans le cas d'une vitre (6) mobile, le cadre extérieur (1) reçoit une coulisse profilé (2) à section en U pourvue, aux extrémités libres des branches du U, de deux joints à lèvres (18 et 18') dirigés l'un vers l'autre et fermant sensiblement l'ouverture de la rainure formée par ladite coulisse (2), et munie sur sa face externe de lèvres d'étanchéité (19) et d'au moins une protubérance de calage et d'accrochage (19'), par exemple un cran profilé, pour assurer la tenue et le maintien de ladite coulisse (2) dans le cadre extérieur (1) dans lequel ladite coulisse (2) est reçue en y étant entièrement intégrée.

9. Ensemble de cadre selon l'une quelconque des revendications 1 à 8, **caractérisé en ce que** les cadres extérieur (1) et intérieur (4) sont réalisés chacun d'un seul tenant par moulage par injection d'un matériau ou d'un mélange de matériaux thermoplastique(s), ou éventuellement thermodurcissables, et s'étendent, dans le cas d'une ouverture (5) quadrilatérale, sur au moins trois côtés de ladite ouverture (5).

10. Ensemble de cadre selon l'une quelconque des revendications 1 à 9, **caractérisé en ce que** le cadre extérieur (1) est prolongé, par exemple au niveau du quatrième côté d'une ouverture (5) quadrilatérale, par un profilé de parement extérieur (20), formé d'un seul tenant avec une extrémité dudit cadre extérieur (1) et pouvant être solidarisé mécaniquement avec l'autre extrémité dudit cadre (1), destiné à recouvrir un profilé à joint(s) lécheur(s) (21) extérieur et à verrouiller le montage de ce dernier sur le bord (5') correspondant de l'ouverture (5) concerné.

11. Ensemble de cadre selon la revendication 10, **caractérisé en ce que** le profilé à joint(s) lécheur(s) (21) présente un corps (21') ayant une section sensiblement en forme de U, pouvant être monté par emboîtement sur le bord (5') de l'ouverture (5) concernée et comportant, d'une part, au moins une, et préférentiellement deux, lèvre(s) de fixation (22) situés sur la face interne de la branche extérieure (21 ") du U et venant s'appliquer sur la face externe du bord (5') de l'ouverture (5) et, d'autre part, au moins une, et préférentiellement deux, lèvre(s) d'étanchéité (23) s'étendant à partir de la face externe de la branche intérieure (21''') du U et venant s'appliquer contre la vitre mobile (6) et lécher cette dernière lorsqu'elle se déplace.

12. Ensemble de cadre selon les revendications 10 et 11, **caractérisé en ce que** le profilé de parement (20) présente un corps principal (20') ayant une section sensiblement en C dont l'extrémité supérieure (20') en forme de crochet vient en prise sur un décrochement extérieur (24) protubérant de l'âme du corps (21') du profilé à joints lécheurs (21) et dont l'extrémité inférieure recourbée (20''') entoure et vient en prise arrière sur l'extrémité libre de la branche extérieure (21''') du corps (21') du profilé à joints lécheurs (21), ledit profilé de parement (20) comportant en outre une projection (25) en forme d'aile dans la continuité de la courbure du corps principal (20') et destinée à couvrir sensiblement l'espace entre le corps (21') du profilé (21) et la vitre ou la glace mobile (6).

13. Ensemble de cadre selon l'une quelconque des revendications 1 à 12, **caractérisé en ce que**, en présence d'une partie de vitre fixe (6') et d'une partie de vitre mobile (6), les deux parties de vitre (6 et 6') sont séparées par un montant profilé (26) à section en H, rapporté par montage par enclenchement ou formé d'un seul tenant avec le cadre extérieur (1), ledit montant profilé en H (26) définissant deux rainures opposées (26', 26") dont l'une reçoit une portion de garniture d'étanchéité (3) pour la partie de vitre fixe (6') et dont l'autre reçoit une portion de coulisse (2) de la vitre mobile (6), au moins l'une desdites nervures (26', 26") pouvant éventuellement recevoir de manière ajustée un profilé de renfort métallique (27).

14. Ensemble de cadre selon la revendication 13, **caractérisé en ce que** le montant profilé (26) rapporté est monté par emboîtement dans deux zones en regard du corps profilé (1') à section en U du cadre extérieur (1) et est pourvu, à l'une des extrémités des deux parois parallèles correspondant aux deux branches de la section en H, d'ouvertures (28) pour l'engagement avec enclenchement de protubérances (1'') formées sur les parois internes des deux parois latérales du corps (1') à section en U au niveau de la première zone, et, à l'autre desdites extrémités des parois latérales du montant profilé (26), de deux crochets opposés (29) destinés à s'engager avec enclenchement dans des ouvertures correspondantes (1''') ménagées dans l'âme du corps (1') à section en U au niveau de la seconde zone, le montant profilé rapporté (26) reposant en outre, au niveau des deux zones, sur les extrémités des branches dudit corps (1') à section en U du cadre extérieur (1) par l'intermédiaire de décrochements (30) adaptés formés dans les deux parois parallèles dudit montant (26) à section en H.

15. Sous-ensemble pour fenêtre de portière de véhicule automobile, comportant une vitre mobile et une vitre fixe, **caractérisé en ce qu'**il est constitué par un cadre extérieur selon l'une quelconque des revendications 1 à 14, prolongé par un profilé de parement et dans lequel sont au moins rapportés des garnitures d'étanchéité pour vitre fixe, un montant séparateur à section en H, une vitre fixe et une coulisse pour vitre mobile.

16. Portière de véhicule automobile pourvue d'une fenêtre, **caractérisé en ce qu'**il comporte un ensemble de cadre pour vitre(s) ou glace(s) selon l'une au moins des revendications 1à 14.

## Claims

1. Fixed and/or movable frame assembly for window(s), enclosing an opening in a support (9), in particular for a motor vehicle window, comprising an outer frame (1) forming a door slide (2) and/or door lining (3), optionally consisting of a plurality of longitudinal segments, and a profiled inner frame (4) forming a trimming edge, optionally consisting of a plurality of longitudinal segments, **characterised in that** the outer frame (1) and inner frame (4), or at least some of their respective constituent segments, are assembled and joined to an edge (5') of the opening (5) receiving the window (6, 6') by cooperating means (7, 7'; 8, 8') for assembly and mounting by fitting and interlocking.

2. Frame assembly according to claim 1, **characterised in that** the outer frame (1), or if appropriate some of its constituent segments, comprise(s) a plurality of protruding lugs or wing portions (7), each ending with an attachment means (7'), and the inner frame (4), or if appropriate some of its constituent segments, comprise(s) a joining wing or wing segments (8) provided with orifices (8') for receiving the ends, having attachment means (7'), of the lugs or wing portions (7) of the outer frame (1) or of segments of said frame, said frame assembly (1, 4) being assembled and mounted in the opening (5) in the support (9) receiving said at least one window (6, 6'), for example the window opening in a door, by introduction of said lugs or wing portions (7) into suitably shaped, sized and arranged passage openings (10) formed in the edge (5') of the opening (5) in the support (9) and extension of the ends, provided with attachment means (7'), of said lugs or wing portions beyond the joining wing or wing segments (8), producing a connection by interlocking engagement of said attachment means (7') in the region of said receiving orifices (8'), the edge (5') of the opening (5) thus being sandwiched between said outer frame (1) and inner frame (4), preferably with resilient pinching.

3. Frame assembly according to any one of claims 1 and 2, **characterised in that** the inner frame (4) consists of a profiled body (4') forming an inner cap covering the edge (5') of the opening (5) and the means (7, 7', 8, 8') for mounting and assembling the two frames (1, 4) and on which are formed, on the one hand, a joining wing or wing segments (8) comprising receiving and attachment orifices (8') and, on the other hand, a second wing (11) forming a counter-wing or spaced-apart counter-wing segments (11), extending remotely from and substantially parallel to the joining wing or wing segments (8), the spacing and the configuration of the joining wing (8) and the counter-wing (11) being suitable for receiving between them the edge (5') of the opening (5) with a resilient pinching and/or interlocking effect.

4. Frame assembly according to claim 3, **characterised in that** the counter-wing or the counter-wing segments (11) extend(s), in terms of height, beyond the receiving orifices (8') in the joining wing or wing segments (8), said counter-wing (11) having openings, or the counter-wing segments (11) having intervals (11') between successive segments, allowing the passage of the lugs or wing portions (7) of the outer frame (1), which enter into engagement in the region of the joining wing or wing segments (8).

5. Frame assembly according to any one of claims 1 to 4, **characterised in that** the outer frame (1) comprises a profiled body (1') having in cross-section, at least over a portion of its length, substantially a U-shaped structure with orthogonal branches, and **in that** on said body (1') there is formed or attached, over at least a portion of its length, at least one sealing means (12, 13) which is forcefully applied against the outer face or wall (9') of the support (9) comprising the opening (5) receiving the window (6, 6') after assembly and mounting of said frame assembly (1, 4).

6. Frame assembly according to any one of claims 1 to 5, **characterised in that**, in particular in the case of a support (9) having spaced-apart double walls (9', 9"), such as a motor vehicle door, said support (9) has, on the one hand, an outer recess (14) allowing flush accommodation of the outer frame (1) and, on the other hand, an inner recess (15) against which rests the profiled body (4') of the inverted L-shaped inner frame (4), to provide an edge (5') for the opening (5) in said thin support (9), formed if appropriate by the joining at the surface of the wall portions (9', 9") forming said support (9).

7. Frame assembly according to claims 5 and 6, **characterised in that** the outer frame (1) is provided, on the one hand, with a rigid wing or an outer lip seal (12) which is applied against the outer face or wall (9') of the support (9), optionally in the region of a second recess (16) in the outer face or wall (9'), and, on the other hand, with a compression seal or a second lip seal (13) which is applied in proximity to the passages (10) of the edge (5') of the opening (5) and pinched between the outer face or wall (9') of said edge and the outer frame (1) during the assembly and mounting of the two frames (1, 4) in the opening (5), the outer lip seal (12) and inner lip seal (13) being formed, if appropriate, on a single support profile (17) mounted by fitting and by mating on the body (1') of the outer frame (1).

8. Frame assembly according to any one of claims 1 to 7, **characterised in that**, in the case of a movable window (6), the outer frame (1) receives a profiled slide (2) having a U-shaped cross-section and being provided, at the free ends of the branches of the U, with two lip seals (18, 18') directed toward each other and substantially closing the opening of the groove formed by said slide (2), and provided on its outer face with sealing lips (19) and with at least one wedging and attachment protrusion (19'), for example a profiled ridge, for holding and keeping said slide (2) in the outer frame (1) in which said slide (2) is received by being integrated entirely therein.

9. Frame assembly according to any one of claims 1 to 8, **characterised in that** the outer frame (1) and inner frame (4) are each formed in one piece by injection-moulding of a thermoplastic material or of a mixture of thermoplastic materials, or optionally thermosetting materials, and extend, in the case of a quadrilateral opening (5), over at least three sides of said opening (5).

10. Frame assembly according to any one of claims 1 to 9, **characterised in that** the outer frame (1) is extended, for example in the region of the fourth side of a quadrilateral opening (5), by an outer lining profile (20) formed in one piece with an end of said outer frame (1) and capable of being mechanically joined to the other end of said frame (1), intended to cover an outer profile with strip seal(s) (21) and to lock the mount of said profile to the corresponding edge (5') of the relevant opening (5).

11. Frame assembly according to claim 10, **characterised in that** the profile with strip seal(s) (21) has a body (21') having a substantially U-shaped cross-section capable of being mounted by fitting to the edge (5') of the relevant opening (5) and comprising, on the one hand, at least one, and preferably two, fixing lip(s) (22) located on the inner face of the outer branch (21') of the U and being applied over the outer face of the edge (5') of the opening (5) and, on the other hand, at least one, and preferably two, sealing lip(s) (23) extending from the outer face of the inner branch (21''') of the U and being applied against the movable window (6) and sealing said window when it moves.

12. Frame assembly according to claims 10 and 11, **characterised in that** the lining profile (20) has a main body (20') having a substantially C-shaped cross-section, the upper, hook-shaped end (20') of which engages with an outer projection (24) of the web of the body (21') of the profile with strip seals (21) and the lower, curved end (20''') of which surrounds and enters into rear engagement with the free end of the outer branch (21"') of the body (21') of the profile with strip seals (21), said lining profile (20) further comprising a wing-type projection (25) in the continuity of the curvature of the main body (20') and being intended substantially to cover the space between the body (21') of the profile (20) and the movable window (6).

13. Frame assembly according to any one of claims 1 to 12, **characterised in that**, in the presence of a fixed window portion (6') and of a movable window portion (6), the two window portions (6, 6') are separated by a profiled upright (26) having an H-shaped cross-section and engaged or formed in one piece with the outer frame (1), said H-shaped profiled upright (26) defining two opposing grooves (26', 26"), one of which receives a sealing lining portion (3) for the fixed window portion (6') and the other of which receives a sliding portion (2) of the movable window (6), wherein at least one of said grooves (26', 26") may optionally receive in an appropriate manner a metallic reinforcement profile (27).

14. Frame assembly according to claim 13, **characterised in that** the attached profiled upright (26) is fitted in two opposing zones of the profiled body (1'), having a U-shaped cross-section of the outer frame (1), and is provided, at one of the ends of the two parallel walls corresponding to the two branches of the H-shaped cross-section, with openings (28) for engagement with protrusions (1") formed over the inner walls of the two lateral walls of the body (1') having a U-shaped cross-section, in the region of the first zone, and, at the other of said ends of the lateral walls of the profiled upright (26), with two opposing hooks (29) intended to engage with corresponding openings (1"') formed in the web of the body (1') having a U-shaped cross-section, in the region of the second zone, the attached profiled upright (26) furthermore resting, in the region of the two zones, on the ends of the branches of said body (1'), having a U-shaped cross-section, of the outer frame (1) via appropriate recesses (30) formed in the two parallel walls of said upright (26) having an H-shaped cross-section.

15. Sub-assembly for a motor vehicle door window, comprising a movable window and a fixed window, **characterised in that** it consists of an outer frame according to any one of claims 1 to 14, extended by a lining profile and in which there are at least attached sealing linings for the fixed window, a separating upright having an H-shaped cross-section, a fixed window and a slide for the movable window.

16. Motor vehicle door provided with a window, **characterised in that** it comprises a frame assembly for window(s) according to at least one of claims 1 to 14.

## Patentansprüche

1. Rahmensystem für Scheibe(n) und/oder (ein oder mehrere) Fenster, fest und/oder beweglich, eine Öffnung eines Trägers (9) verschließend, insbesondere für Kraftfahrzeugfenster oder -fensteröffnung, mit einem eventuell mehrere Längssegmente umfassenden, den Führungsschienenhalter (2) und/oder Dichtungsgarniturhalter (3) bildenden Außenrahmen (1) und einem eventuell mehrere Längssegmente umfassenden, eine Verkleidungsumrandung bildenden Profil-Innenrahmen (4),
**dadurch gekennzeichnet, dass** der Außenrahmen (1) und der Innenrahmen (4) oder wenigstens einige ihrer jeweiligen Hauptsegmente zusammengefügt werden und mit einem Rand (5') der Öffnung (5), die das Fenster oder die Scheibe (6, 6') aufnimmt, durch kooperierende Zusammenbau- und Montageeinrichtungen (7, 7'; 8, 8') verbunden werden, durch Verschachtelung und Einrastung.

2. Rahmensystem nach Anspruch 1, **dadurch gekennzeichnet, dass** der Außenrahmen (1), oder gegebenenfalls einige seiner Hauptsegmente, mehrere vorstehende Klauen oder Flügelstücke (7) umfasst (umfassen), die alle mit einer Einrasteinrichtung (7') enden, und der Innenrahmen (4), oder gegebenenfalls einige seiner Hauptsegmente, einen Befestigungsflügel oder Befestigungsflügelsegmente (8) umfasst (umfassen), versehen mit Öffnungen (8') zur Aufnahme der Einrasteinrichtungsenden (7') der Klauen oder Flügelstücke (7) des Außenrahmens (1) oder von dessen Segmenten, wobei das Zusammenfügen und das Einbauen des genannten Rahmensystems (1, 4) in die Öffnung (5) des Trägers (9) - zum Beispiel eine Fensteröffnung in einer Tür oder Wagentür - für die Aufnahme wenigstens einer Scheibe oder eines Wagenfensters (6, 6') realisiert werden durch Einführung der genannten Klauen oder Flügelstücke (7) in Durchgangsöffnungen (10), angepasst bezüglich Form, Abmessungen und Anordnung und vorgesehen in dem Rand (5') der Öffnung (5) des Trägers (9), und Ausdehnung ihrer mit den Einrasteinrichtungen (7') versehenen Enden über den Befestigungsflügel oder Befestigungsflügelsegmente (8) hinaus,
mit Herstellung einer Verbindung durch Einrasten der genannten Einrasteinrichtungen (7') in den genannten Aufnahmeöffnungen (8'), wobei auf diese Weise der Rand (5') der Öffnung (5) eingeklemmt wird zwischen dem Außenrahmen (1) und dem Innenrahmen (4), vorzugsweise mit elastischer Klemmung.

3. Rahmensystem nach einem der Ansprüche 1 und 2, **dadurch gekennzeichnet, dass** der Innenrahmen (4) durch einen Profilkörper (4') gebildet wird, mit einer den Rand (5') der Öffnung (5) und die Zusammenbau- und Montageeinrichtungen (7, 7'; 8, 8') der beiden Rahmen (1 und 4) abdeckenden Innenblende, einerseits einen Befestigungsflügel oder Befestigungsflügelsegmente (8) mit Öffnungen (8') zur Aufnahme und Einrastung umfassend und andererseits einen zweiten Flügel (11), einen Gegenflügel oder beabstandete Gegenflügelsegmente (11) bildend, mit Abstand und im Wesentlichen parallel in Bezug auf den Befestigungsflügel oder die Befestigungsflügelsegmente (8), wobei der Abstand und die Form des Befestigungsflügels (8) und des Gegenflügels (11) angepasst sind, um den Rand (5') der Öffnung (5) zwischen sich aufzunehmen, mit dem Effekt einer elastischen Klemmung und/oder Einrastung.

4. Rahmensystem nach Anspruch 3, **dadurch gekennzeichnet, dass** der Gegenflügel, oder die Gegenflügelsegmente, sich nach oben über Aufnahmeöffnungen (8') des Befestigungsflügels oder der Befestigungsflügelsegmente (8) hinaus erstreckt (erstrecken), wobei der genannte Gegenflügel (11) Öffnungen aufweist, oder die Gegenflügelsegmente (11) zwischen aufeinanderfolgenden Segmenten Zwischenräume (11') aufweisen, die die Klauen oder Flügelstücke (7) des Außenrahmens (1) durchlassen, zum Einrasten am Befestigungsflügel oder an Befestigungsflügelsegmenten (8).

5. Rahmensystem nach einem der Ansprüche 1 bis 4, **dadurch gekennzeichnet, dass** der Außenrahmen (1) einen Profilkörper (1') umfasst, dessen Querschnitt über wenigstens einen Teil seiner Länge eine im Wesentlichen U-förmige Struktur mit rechtwinkligen Zweigen aufweist, und dadurch, dass der genannte Körper (1') über wenigstens einen Teil seiner Länge eine ausgebildete oder angebrachte Dichtungseinrichtung (12, 13) umfasst, die unter Spannung gegen die Außenfläche oder -wand (9') des Trägers (9) drückt, der die Öffnung (5) umfasst, die nach Zusammenbau und Montage des genannten Rahmensystems (1, 4) die Scheibe oder das Fenster (6, 6') aufnimmt.

6. Rahmensystem nach einem der Ansprüche 1 bis 5, **dadurch gekennzeichnet, dass** - insbesondere im Falle eines Trägers (9) mit Doppelwand (9', 9"), zum Beispiel einer Kraftfahrzeugtür -, der genannte Träger (9) einerseits eine Außeneinbuchtung (14) aufweist, in der der Außenrahmen (1) sitzt, und andererseits eine Inneneinbuchtung (15), auf der sich der Profilkörper (4') des verkehrt L-förmigen Innenrahmens (4) abstützt, um einen Rand (5') der Öffnung (5) des genannten Trägers (9) von geringer Dicke zu erhalten, gegebenenfalls gebildet durch die Oberflächenverbindung der den genannten Träger (9) bildenden Wandteilstücke (9', 9").

7. Rahmensystem nach den Ansprüchen 5 und 6, **dadurch gekennzeichnet, dass** der Außenrahmen (1) einerseits außen einen steifen Flügel oder eine Lippendichtung (12) umfasst, sich abstützend auf der Außenfläche oder -wand (9') des Trägers (9), eventuell auf Höhe einer zweiten Einbuchtung (16) der Außenfläche oder -wand (9'), und andererseits innen eine Abquetschdichtung oder eine zweite Lippendichtung (13) umfasst, die sich in der Nähe der Durchgänge (10) des Rands (5') der Öffnung (5) abstützt und die bei dem Zusammenbau und dem Einbau der beiden Rahmen (1 und 4) in die Öffnung (5) eingeklemmt wird zwischen der Außenfläche oder -wand (9') dieser letzteren und dem Außenrahmen (1), wobei die äußere (13) und die innerer (12) Lippendichtung gegebenenfalls in einem selben Trägerprofil (17) ausgebildet sind, das mittels Verschachtelung und Formkonjugation bzw. - anpassung auf den Profilkörper (1') des Außenrahmens (1) montiert ist.

8. Rahmensystem nach einem der Ansprüche 1 bis 7, **dadurch gekennzeichnet, dass** im Falle einer beweglichen Scheibe (6) der Außenrahmen (1) eine Profilführungsschiene (2) mit U-förmigem Querschnitt umfasst, an den freien Enden der U-Zweige zwei gegeneinander gerichteten Lippendichtungen (18 und 18') umfassend, die im Wesentlichen die Öffnung der durch die genannte Führungsschiene (2) gebildeten Rille verschließen, und an seiner Außenseite Dichtlippen (19) und wenigstens einen Verkeilungsvorsprung (19') umfassend, zum Beispiel eine Profilkerbe, um der Führungsschiene (2) in dem Außenrahmen (1), der die Führungsschiene (2) aufnimmt und in den sie ganz integriert ist, Festigkeit und Halt zu verleihen.

9. Rahmensystem nach einem der Ansprüche 1 bis 8, **dadurch gekennzeichnet, dass** der Außenrahmen (1) und der Innenrahmen (4) jeweils aus einen Stück sind, realisiert durch Spritzguss aus einem Werkstoff, oder einer Mischung von Werkstoffen, Thermoplast(en) oder eventuell Duroplast(en), und sich im Falle einer vierseitigen Öffnung (5) über wenigstens drei Seiten der genannten Öffnung (5) erstreckt.

10. Rahmensystem nach einem der Ansprüche 1 bis 9, **dadurch gekennzeichnet, dass** der Außenrahmen (1) zum Beispiel auf Höhe der vierten Seite einer vierseitigen Öffnung (5) durch ein Außenverkleidungsprofil (20) verlängert wird, das aus einem Stück mit einem Ende des genannten Außenrahmens (1) ist, mechanisch mit dem anderen Ende des Rahmens (1) verbunden werden kann und dazu bestimmt ist, ein Leckdichtungs- bzw. Leckdichtungen-Außenprofil (21) zu überdecken und den Einbau dieses letzteren in den entsprechenden Rand (5') der betreffenden Öffnung (5) zu verriegeln.

11. Rahmensystem nach Anspruch 10, **dadurch gekennzeichnet, dass** das Leckdichtungs- bzw. Leckdichtungen-Profil (21) einen Körper (21') mit einem im Wesentlichen U-förmigen Querschnitt aufweist, der durch Einrastung bzw. Verschachtelung auf den Rand (5') der betreffenden Öffnung (5) montiert werden kann und einerseits wenigstens eine und vorzugsweise zwei Befestigungslippe(n) (22) umfasst, auf der Innenseite des Außenzweigs (21 ") des U befindlich und sich abstützend auf der Außenseite des Rands (5') der Öffnung (5), und andererseits wenigstens eine und vorzugsweise zwei sich von der Außenseite des Innenzweigs (21''') des U aus erstreckenden und auf der beweglichen Scheibe (6) abstützenden und sie, wenn sie sich verschiebt, ableckenden Dichtlippe(n) (23) umfasst.

12. Rahmensystem nach den Ansprüchen 10 und 11, **dadurch gekennzeichnet, dass** das Verkleidungsprofil (20) einen Hauptkörper (20') mit einem im Wesentlichen C-förmigen Querschnitt aufweist, dessen hakenförmiges oberes Ende (20") mit einer Nase (24) des Körpers (21') des Lecklippenprofils (21) kooperiert, und dessen unteres gekrümmtes Ende (20'") ein freies Ende des Außenzweigs (21''') des Körpers (21') des Lecklippenprofils (21) umgreift, wobei das genannte Verkleidungsprofil (20) außerdem einen die Krümmung des Hauptkörpers (20') kontinuierlich fortsetzenden flügelförmigen Vorsprung (25) umfasst, der dazu bestimmt ist, den Raum zwischen dem Körper (21') des Profils (21) und der beweglichen Scheibe oder dem Wagenfenster (6) im Wesentlichen abzudecken.

13. Rahmensystem nach einem der Ansprüche 1 bis 12, **dadurch gekennzeichnet, dass** im Falle eines festen Fensterteils (6') und eines beweglichen Fensterteils (6) die beiden Fensterteile (6 und 6') durch einen Profilpfosten (26) mit H-förmigem Querschnitt getrennt werden, entweder mit Einrastung montiert oder aus einem Stück mit dem Außenrahmen, wobei der genannte Pfosten (26) zwei entgegengesetzte Rillen (26', 26") aufweist, von den eine mit einer Dichtungsgarnitur (3) für den festen Fensterteil (6) versehen ist und die andere mit einem Führungsschienenstück (2) für den beweglichen Fensterteil (6) versehen ist, wobei wenigstens eine der beiden Rillen (26', 26") eventuell auf angepasste Weise ein metallisches Verstärkungsprofil umfassen kann.

14. Rahmensystem nach Anspruch 13, **dadurch gekennzeichnet, dass** der montierte Profilpfosten (26) durch Einrastung in zwei sich gegenüberstehenden Zonen des U-förmigen Profilkörpers (1') des Außenrahmens (1) eingesetzt wird und an einem der Enden der beiden parallelen, den beiden Zweigen des H-förmigen Querschnitts entsprechenden Wänden Öffnungen (28) zur Einrastung von Vorsprüngen (1") umfasst, ausgebildet auf den Innenwänden der beiden Seitenwände des Körpers (1') mit U-förmigem Querschnitt in Höhe der ersten Zone, und an dem anderen der genannten Enden der Seitenwände des Profilpfostens (26) zwei entgegengesetzte Haken (29) umfasst, bestimmt zur Einrastung in entsprechende Öffnungen (1'''), vorgesehen im Innern des U-förmigen Körpers (1') in Höhe der zweiten Zone, wobei der montierte Profilpfosten (26) außerdem in Höhe der beiden Zonen auf den Enden der Zweige des U-förmigen Körpers (1') des Außenrahmens (1) auf entsprechend geformten Ausbuchtungen (30) der beiden parallelen Wänden des genannten H-förmigen Pfostens ruht.

15. Unter- bzw. Teilsystem für Kraftfahrzeugtürfenster mit einer beweglichen Scheibe und einer festen Scheibe, **dadurch gekennzeichnet, dass** es durch einen Außenrahmen nach einem der Ansprüche 1 bis 14 gebildet wird, der verlängert wird durch ein Verkleidungsprofil und der wenigstens Dichtungsgarnituren für eine feste Scheibe, einen Trennpfosten mit H-förmigem Querschnitt, eine feste Scheibe und eine Führungsschiene für eine bewegliche Scheibe umfasst.

16. Kraftfahrzeugtür, versehen mit einem Fenster, **dadurch gekennzeichnet, dass** sie ein Rahmensystem für Scheibe(n) oder (ein oder mehrere) Fenster nach einem der Ansprüche 1 bis 14 umfasst.
